# EUROPEAN PATENT SPECIFICATION

(11) **EP 3 205 626 B1**
(45) Date of publication and mention of the grant of the patent: **09.09.2020**
(21) Application number: 16155029.8
(22) Date of filing: 10.02.2016
(51) Int. Cl.: C02F 1/68, E03F 1/00, E03F 5/02

(54) **UNIT FOR TREATING FLOWING LIQUID**
VORRICHTUNG ZUR BEHANDLUNG VON FLÜSSIKEITEN
DISPOSITIF POUR LE TRAITEMENT DES FLUIDES

(43) Date of publication of application: 16.08.2017
(73) Proprietor: Grundfos Holding A/S, 8850 Bjerringbro (DK)
(72) Inventor: KILLERICH, Bruno, 8860 Ulstrup (DK); SCHOU, Christian, 7442 Engesvang (DK); LYNGSØ, Martin, 8382 Hinnerup (DK)
(74) Representative: Patentanwälte Vollmann Hemmer Lindfeld Partnerschaft mbB

(56) References cited:
- DE-A1-102007 054 115
- US-A1- 2004 173 525
- US-B1- 7 273 561
- "Entfernung von Schwefelwasserstoff aus Abwassersammlern durch Einsatz von Eisensalzen Entfernung von H 2 S in Abwassersammlern", Kronos ecochem Technische Information 3.09, 31 December 2007 (2007-12-31), XP055118889, Retrieved from the Internet: URL:http://www.kronosecochem.com/ehome_de. nsf/Multi Media Files/F53E9B7361CB410D85257BBF00545D07/$Fi le/TI_3_09_DE_H2S-Entfernung.pdf?OpenEleme nt [retrieved on 2014-05-20]
- WEISMANN D ET AL: "Abwasserbehandlung", 1 January 2007 (2007-01-01), SULFID-PRAXISHANDBUCH DER ABWASSERTECHNIK, VULKAN-VERLAG, ESSEN, DE, PAGE(S) 440 - 515, XP008168931, ISBN: 978-3-8027-2845-7 * page 497 * * figure 14.28 *

## Description

This invention concerns a device for treating flowing liquid, especially for treating waste water.

Hydrogen sulfide, H₂S, can be formed in sewer systems. This hydrogen sulfide occurs either in stationary waste water or during the transport of waste water to the treatment plant. This hydrogen sulfide gas is foul-smelling and highly toxic. A further problem of this gas is that it has an extremely corrosive effect on metal and concrete. This problem is well known and solutions have been found to reduce this hydrogen sulfide by treating the waste water. (HVITVED-JACOBSEN, Thorkild; VOLLERSTEN, Jes; NIELSEN, Asbjørn: Sewer Processes - Microbial and Chemical Process Engineering of Sewer Networks. Second Edition: April 23, 2013 by CRC Press Taylor & Francis Group)

This effect is described in technical information 3.09 from Kronos International, Inc. 51373 Leverkusen, Germany under the heading "Ent-fernung von Schwefelwasserstoff aus Abwassersammlern durch Einsatz von Eisensalzen". One solution to solve this problem is to treat sewage with oxygen. However, the problem is that H₂S can be generated in this sewage when oxygen is depleted for example due to the consumption of oxygen by bacteria in the water. On the other hand H₂S can be eliminated from the waste water by adding iron salts. Then the sulfides are converted into poorly soluble iron sulfide in the aqueous phase with the result that there is no longer any hydrogen sulfide in the gas phase.

For adding these iron salts, it is necessary to bring them into solution first and then to dose this solution into the waste water. In practice this is rather complicated as there has to be installed a storage tank for the liquid with iron salts. There has to be a manhole for connecting the sewage conduit with the run-out of a conduit coming from a dosing pump and the storage tank. For this purpose one or more concrete shafts have to be installed underground. A switch board has to be installed above the ground comprising control means for dosing the chemical into the flowing liquid to be treated. All these members have to be connected with electrical cables and appropriate tubes. These provisions are complex and expensive.

Not only for treating waste water but also for treating clean water it is known to add chlorine for disinfection purposes. Chlorine can be added by dosing the gas, which is complicated and may be dangerous with respect to leakages. Another way to add chlorine is to dose sodium hypochlorite solution. A large quantity of this solution has to be provided and stored. This solution is toxic, highly irritating and corrosive. This is the reason why for industrial applications this solution is directly produced by electrolysis of sodium chloride in solution. This directly produced sodium hypochlorite solution has only to be stored in small quantities before dosing. An apparatus for this electrolysis is well known under the trademark Selcoperm of Grundfos. For water treatment the Selcoperm system has to be connected with a storage tank, there has to be installed a dosing pump and sensor and control means for treating of the water.

It is one aspect of the invention to create a system for treating flowing liquid, especially for treating waste water which is easy to install, simple to operate and cost effective for installing and running.

According to the invention, there is a unit for treating flowing liquid, especially for treating waste water. This unit comprises a well, an inlet conduit connector and an outlet conduit connector both on the outside of the well and connected by a connecting conduit inside the well. Inside the well there is at least one storage tank for at least one liquid chemical and a metering pump for pumping the at least one liquid chemical from the storage tank into the connecting conduit. Further there are control means for activating the metering pump inside the well.

A special advantage of this invention is that all parts of the systems are arranged in a unit in the form of a well which is adapted to be arranged underground with the top opening of the well near the surface of the ground. As there is an inlet connector and an outlet connector outside the well, this unit can be arranged in any sewage pipeline below the ground by preparing a hole for the well and connecting the conduit connectors to the sewage pipeline. The well can consist of stainless steel, reinforced concrete, plastics or a combination of this. The well should be light in weight, strong enough to withstand the pressure of the surrounding soil and corrosion resistant.

According to the invention, the unit may have sensor means for detecting flow in the connecting conduit, sensor means for detecting the quantity of one or more chemical compounds or elements of the liquid in the connecting conduit upstream and/or downstream of the run-out of the conduit coming from the metering pump. The control means are adapted for activating the metering pump dependent on the detected flow and quantity. The sensor means upstream of the run-out of the conduit coming from the metering pump are adapted for detecting any chemical in the flowing liquid which shall be reduced or removed. The sensor means downstream of the run-out of the conduit coming from the metering pump may also be adapted to detect the

It may be that the sensor means are arranged in a conduit parallel to the main conduit if for example H₂S has to be detected as for detecting the quantity of H₂S in water it is important to measure always at a low pH value. So if the sensor for measuring H₂S is arranged in a small parallel conduit there may be a metering pump upstream the sensor for adjusting the pH value by adding acid or basic liquid.

If the well advantageously is envisaged and designed for being arranged in the ground the upper end may extend to the surface of the ground. This upper end of the well should be closed by a cover so that the inside of the well with the system arranged therein is protected on the one hand and the surface of the ground is closed on the other hand. The cover should be stable enough to bear a person entering it or a car running over this cover.

According to the invention the storage tank is arranged at the bottom of the well. This means in practice that the storage tank is deep enough under the ground below the frost line. This region of the well is predestined for arranging one or more storage tanks as this is the most stable region of the well and the most secure position for liquid or gaseous chemicals. The upper side of the storage tank or a platform is arranged on the upper side of the storage tank and forms a floor surface for a person entering the well.

There are different possibilities to arrange and to fasten the cover. It is advantageous to arrange the cover having a fixed part and a movable part said movable part being pivoted to the fixed part so that you can open the well by folding the movable part about at least 90° or up to 180° so that the movable part is lying on the fixed part. These cover parts can be realized by sections of sheet metal as these are used for industrial floor. By emptying the storage tank with the dosing you can open the well by folding the movable part about at least 90° or up to 180° so that the movable part is lying on the fixed part. These cover parts can be realized by sections of sheet metal as these are used for industrial floors. By emptying the storage tank with the dosing pump venting air has to be ledto the storage tank. An easy way to do this is to arrange a venting pipe in the well which is connected at its lower end to the storage tank and which leads to the atmosphere. Preferably this venting pipe runs through the fixed part of the cover and ends at a distance from the cover over the ground.

For easily filling the storage tank it is advantageous to have a filling pipe similar to the venting pipe ending with its lower end in the storage tank and with its upper end in the region of the cover. This pipe may lead through the fixed part and has a lockable lid or preferably ends below the movable part of the cover so that you can fill in fluid after having opened the cover.

There may be sensor means for detecting the quantity of the one or more chemical compounds or elements of the liquid in the connecting unit and there should be a distance between the sensor means and the run-out of the conduit coming from the metering pump which is dependent on the maximal flow speed. This distance should be in a dimension to make sure that the chemical which is added by the metering pump to the flowing liquid enters that part of the flowing liquid which has been monitored before. This distance should be at least 5% of the diameter of the well, preferably more. The distance between the sensor means and the run-out of the conduit coming from the metering pump depends on the response-time of the sensor means. If the maximum flow speed is known, according to the invention the distance between the sensor means and the run-out of the conduit coming from the metering pump can e. g. be 5, 10, 20, 40, 50, 60, 75, 100, 200 or 500 times the maximum flow speed multiplied by the response-time of the sensor means.

The connecting conduit inside the well should be arranged on the one hand as deep as possible, to be under the frost line, on the other hand at a distance from the bottom of the well, especially the platform or floor surface of the storage tank so that valves, sensor means arranged in it are located in a working height of a person who has entered the well. In practice it will be advantageous to arrange the connecting conduit in the middle third of the overall height of the well, at least 80 cm under the top of the well. Furthermore it is advantageous to arrange the connecting conduit inside the well, not in the middle of the well running through the center but at a distance so that a person can stand beneath this connection conduit even if the diameter of the well is not so big.

It may be that it is not sufficient to have the aforementioned internal sensor means, then according to a further embodiment of the invention there may be a connection for external sensor means, especially for a gas phase sensor and/or liquid phase sensor for detecting the quantity of one or more chemical compounds or elements. Especially for detecting hydrogen sulfide (H₂S) a gas phase sensor or a liquid phase sensor may be arranged at any suitable position in the sewage system for example in a pump station with a sewer or collector so that the system will be able to respond to concentrations of chemical compounds upstream or downstream the unit outside the well.

At least a part of the control means of the metering pump should be arranged next to the connection conduit in a housing on the inside wall of the well, preferably fastened on the wall of the well. The electrical power may come from a battery in the well or through an electric cable leading into the well. The control means may be completely arranged inside the well or partly arranged inside the well. There may be one or more interfaces for communication with external control means, external sensor means, external registration means. These interfaces may be wireless or connected by wire as it is most suitable in practice.

The invention up to here has been described mainly with respect to the removal of H₂S by adding salts dissolved in water. The unit according to the invention however could also be used for any other chemical or physical treatment of flowing liquid. There may be a system for producing hypochlorite solution for disinfection purposes of water arranged inside the well. The unit will be similarly arranged as described before. However, there is a first storage tank for sodium chloride solution, an electrolyzer arranged inside the well fed by the first storage tank and a second storage tank for receiving the sodium chloride in solution from the plant which is dosed by the metering pump. So there may be several storage tanks in the well, preferably arranged at the bottom.

The invention is hereinafter explained in more detail by way of embodiment examples represented in the drawings. There are shown in:
- Fig. 1: A simplified representation of a sewage system with two pumping stations and a unit according to the invention arranged in the pipeline between,
- Fig. 2: A simplified enlarged representation of the unit of Fig. 1,
- Fig. 3: A top down view on a unit of another embodiment of the invention without cover.

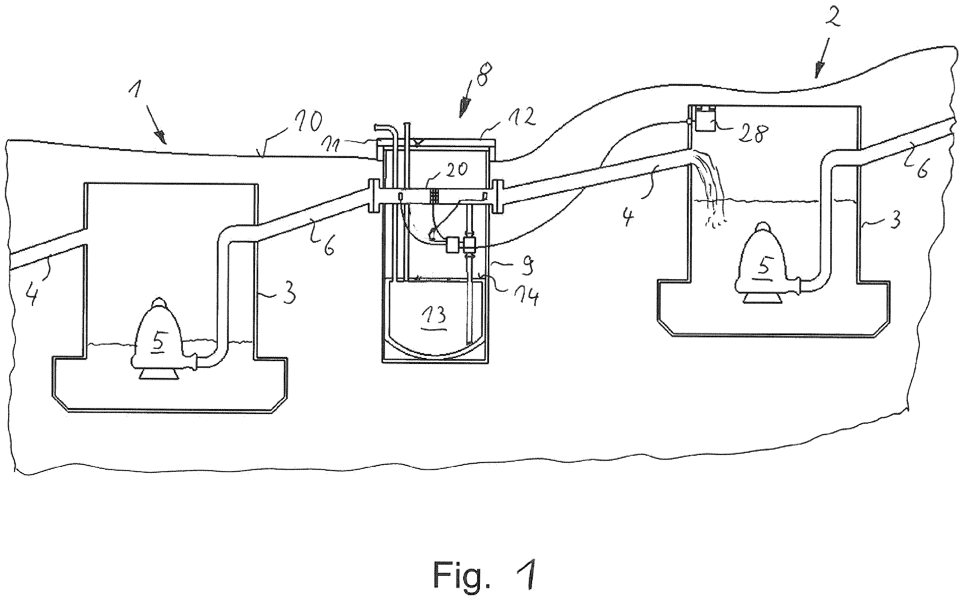

Fig. 1 shows a part of a sewage system with two pump stations 1 and 2 which are connected by a pipeline. These pump stations 1, 2 are each part of an underground pit 3 with one or more pipes 4 leading waste water to the pit. Inside the pit 3 is a level-controlled waste water pump which in this case is a centrifugal pump 5 for emptying the pit 3 when the level inside the pit has reached a predetermined height. The outlet of the pump 5 of the pump station 1 is connected to an outlet pipe 6 which is connected with an inlet pipe 4 of the next pump station 2. The pit 3 of the pump station 2 has a higher level than the pit 3 of the pump station 1. This part of a sewage system stands for any waste water pipeline leading to a pit or coming from a pit. As mentioned in the introduction it is often a problem of sewage systems that there is hydrogen sulfide in the water which exits as soon as there is a free space over the water as you find in any pit or following gravitational sewer system. Then this toxic hydrogen sulfide gas arises which should be avoided.

For this purpose a unit 8 for treating flowing waste water is arranged in the pipeline between the pump stations 1 and 2, which pipeline comprises the outlet pipe 6 and the inlet pipe 4. This pipeline has been interrupted and the unit 8 has been inserted.

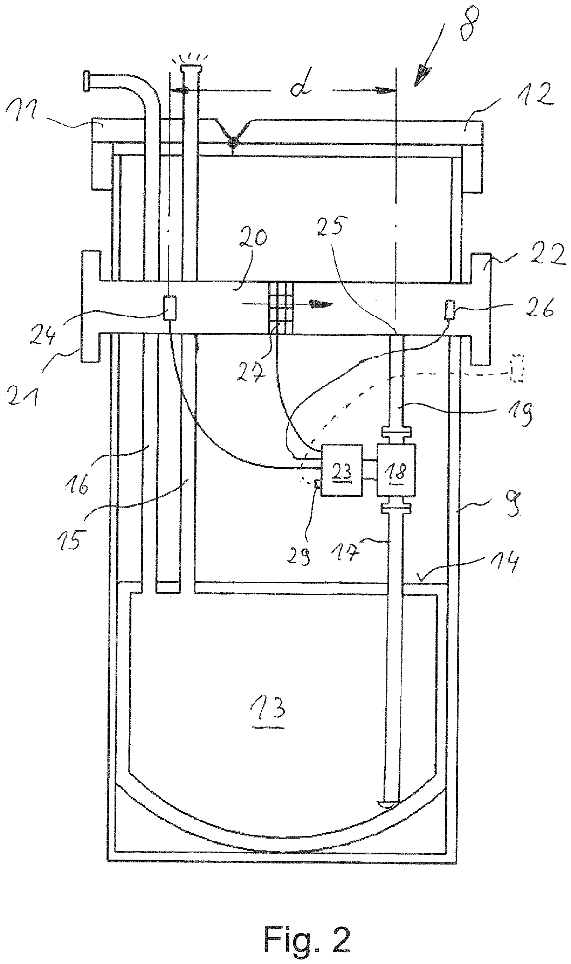

The unit 8 comprises a well 9 which has mainly a cylindrical form with a diameter of 1 meter and a height of 2.5 meters. The diameter of the well 9 has to be at least 1 meter but may be bigger. This well 9 is intended for being arranged in the ground so that its upper end has the level of the surface 10 of the ground. The upper end of the well 9 is closed by a cover which comprises a fixed part 11 and a movable part 12. The movable part 12 is pivotably connected with the fixed part 11. So the movable part 12 can be opened by folding from its horizontal position (as can be seen in Fig. 1 and 2) to a vertical position.

At the bottom of the well 9 there is arranged a storage tank 13 for a liquid. The surface of this storage tank 13 forms a floor of the interior of the well 9 so that a person entering the well 9 through the opened part 12 can stand on this floor 14. The storage tank 13 is connected to the atmosphere by a vertical venting pipe 15. This venting pipe 15 leads through the fixed part 11 into the atmosphere. Beneath this venting pipe 15 there is a filling pipe 16 which ends in the storage tank 13 and which also leads through the fixed part 11 with a lockable cap at the end. Through this filling pipe 16 the storage tank 13 can be filled with a liquid.

A transfer tube 17 reaches to the ground of the storage tank 13 and leads to a metering pump 18 which pumps into a conduit 19 which leads to a connecting conduit 20 of a bigger diameter. This connecting conduit 20 crosses the well 9 at a distance from the middle axis.

This connecting conduit 20 connects the outlet pipe 6 of the pump station 1 with the inlet pipe 4 of the pump station 2. The connecting conduit 20 has two connectors outside the well 9, which is an inlet conduit connector 21 and an outlet conduit connector 22. In this embodiment the connectors are designed as flanges. However, any other suitable connector could be arranged there. The unit 8 is inserted in the sewage system by way of these connectors 21 and 22.

The metering pump 18 which pumps liquid from the storage tank 13 to the connecting conduit 20 is controlled by a digital control unit 23. This control unit 23 starts and stops the metering pump 18 dependent on the signal received by a sensor 24 in a distance d upstream of the run-out 25 of the conduit 19 from the metering pump 18. There is a further sensor 26 downstream the run-out 25 and a flow meter 27 between the sensor 24 and the run-out 25. The sensors 24 and 26 are liquid phase sensors and they detect inside the connecting conduit 20. There may be further sensors outside the well 9 which may be a gas phase sensor 28 as can be seen in Fig. 1 and/or a liquid phase sensor. There is a connector 29 at the control unit 23 for connecting this sensor 28.

In the described embodiment according to Fig. 1 and 2 the sensors 24 and 26 are liquid phase sensors for detecting the quantity of H₂S in the sewage water, the gas phase sensor 28 detects the quantity of H₂S in the air in the pit 3.

At the beginning of operation of the unit 8 in the sewage system the storage tank 13 is filled with liquid solution of iron salts. During operation the waste water in the pit 3 of the pump station 1 is pumped by the pump 5 through the pipe 6 through the connecting conduit 20 of the well 9 and through the pipe 4 into the pit 3 of the pump station 2. The quantity of H₂S in the waste water entering the connecting conduit 20 is measured by the sensor 24. The flow meter 27 measures the flow velocity. According to this data the quantity of the liquid of this ironsalts in aqueous phase is computed in the control unit 23. This quantity is needed to eliminate the H₂S in the waste water flowing through the conduit 20. Accordingly, the metering pump 18 is activated and the computed quantity is realized by controlling the speed of the pump 18. With the H₂S liquid phase sensor 26 downstream the run-out 25 the quantity of H₂S in the liquid flowing through this conduit 20 is measured. If the dosing of the fluid from the storage tank 13 is correct, there should not be any more H₂S in the water. If the sensor 26 still detects H₂S the remaining quantity is calculated and the control unit 23 will increase the speed of the pump 18 and the quantity of the liquid added in the run-out 25. There is a closed-loop control for regulating the quantity of liquid which means for controlling the switching on and off and the speed of the metering pump 18.

Depending on the waste water system and the local circumstances there may be connected an additional gas phase sensor in the control unit 23. This sensor 28 may be arranged additionally to sensor 26 or alternatively.

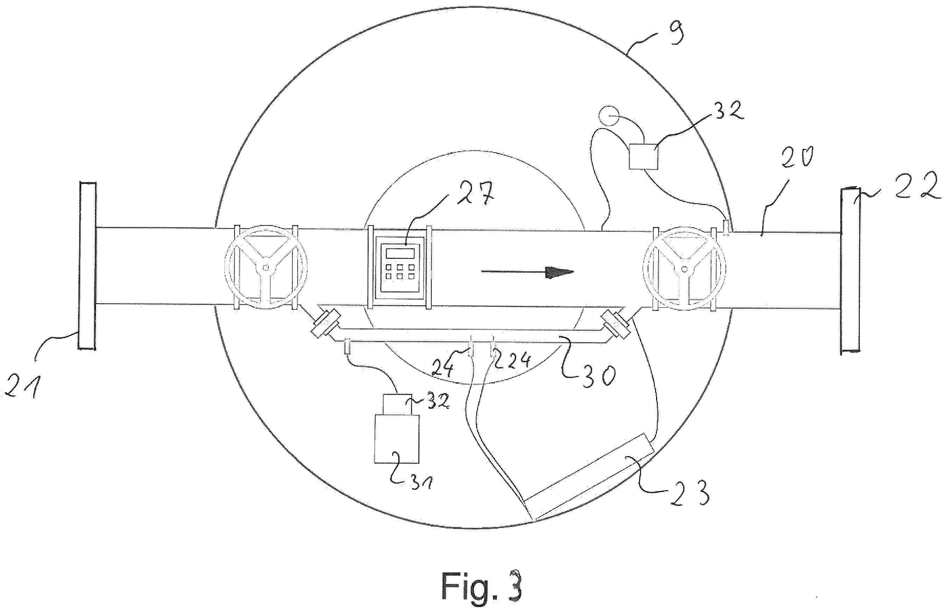

In Fig. 3 an alternative measurement is shown. This arrangement should be used if the pH value of the liquid running through the connecting conduit 30 is not low. In this case there is a measuring conduit 30 arranged in parallel to the connecting conduit 20 inside the well 9. In this measuring conduit 30 the pH value is measured and if necessary acid is added from an acid storage tank 31 by a dosing pump 32 into the conduit 30. This arrangement makes sure that the measurement of the liquid phase sensor 24 always takes place at a low pH value below 4. In this embodiment the run-out 25 of the conduit 19 is near the downstream end of the connecting conduit 20.

### List of reference numerals

- 1 -: pump station
- 2 -: pump station
- 3 -: underground pit
- 4 -: inlet pipe
- 5 -: circulation pump
- 6 -: outlet pipe
- 8 -: unit
- 9 -: well
- 10 -: surface
- 11 -: fixed part of the cover
- 12 -: movable part of the cover
- 13 -: storage tank
- 14 -: floor
- 15 -: venting pipe
- 16 -: filling pipe
- 17 -: transfer tube
- 18 -: metering pump
- 19 -: conduit
- 20 -: connecting conduit
- 21 -: inlet conduit connector
- 22 -: outlet conduit connector
- 23 -: control unit
- 24 -: liquid phase sensor
- d -: distance between sensor 24 and the run-out 25
- 25 -: run-out
- 26 -: liquid phase sensor
- 27 -: flow meter
- 28 -: gas phase sensor
- 29 -: connector
- 30 -: measuring conduit
- 31 -: acid storage
- 32 -: dosing pump

## Claims

1. Unit for treating flowing liquid, especially for treating waste water, with a well (9), with an inlet conduit connector (21) and with an outlet conduit connector (22) at the outside of the well (9), with a connecting conduit (20) inside the well (9), said connecting conduit (20) connecting the inlet conduit connector (21) to the outlet conduit connector (22), with at least one storage tank (13) for at least one liquid or gaseous chemical, with a metering pump or compressor(18) for pumping the at least one chemical from the storage tank (13) into the connecting conduit (20) and with control means (23) for activating the metering pump or compressor (18), **characterised in that** the metering pump or compressor (18), the storage tank (13) and the control means (23) are arranged inside the well (9) with the storage tank (13) being arranged at the bottom of the well (9), with the upper side of the storage tank (13) or a platform arranged on the upper side of the storage tank (13) forming a floor surface (14) for a person entering the well (9).

2. Unit according to claim 1, **characterised in that** there are sensor means (27) for detecting flow in the connecting conduit, with sensor means (24, 26) for detecting the quantity of one or more chemical compounds or elements of the liquid in the connecting conduit (20) upstream and/or downstream of the run-out (25) of the conduit (19) coming from the metering pump (18), and with the control means (23) intended for activating the metering pump or compressor(18) dependent on the detected flow and quantity.

3. Unit according to claim 1, **characterised in that** the sensor means (26) are provided for detecting the quantity of the one or more chemical compounds or elements of the liquid in the connection conduit (20) downstream the run-out (25) of the conduit (19) coming from the metering pump (18) and that a closed-loop control for metering is provided.

4. Unit according to one of the preceding claims, **characterised in that** the well (9) is envisaged and designed for being arranged in the ground, with its upper end extending to the surface (10) of the ground and closed by a cover (11, 12).

5. Unit according to claim 4, **characterised in that** the cover has a fixed part (11) and a movable part, said movable part (12) preferably being pivoted on the fixed part (11),

6. Unit according to claim 5, **characterised in that** a venting pipe (15) is connected to the storage tank (13) and leading to the atmosphere, said venting pipe (15) leading through the fixed part (11) of the cover.

7. Unit according to claim 4, 5 or 6, **characterised in that** there is a filling pipe (16) which opens into the storage tank (13) and which ends below the movable part (12) of the cover or above the fixed part (11) of the cover.

8. Unit according to one of the claims 2-7, **characterised in that** the distance (d) between sensor means (24) for detecting the quantity of the one or more chemical compounds or elements of the liquid in the connecting conduit (20) and the run-out (25) of the conduit (20) coming from the metering pump (18) corresponds to at least 5% of the diameter of the well (9).

9. Unit according to one of the preceding claims, **characterised in that** the connecting conduit (20) inside the well (9) is arranged in the middle third of the overall height of the well (9) at least 80cm under the top of the well (9).

10. Unit according to one of the preceding claims, **characterised in that** the connecting conduit (20) inside the well (9) is arranged at a distance to the middle of the well off center

11. Unit according to one of the preceding claims, **characterised in that** there is a connection (29) for external sensor means (28), especially for a gas phase sensor (28) and/or liquid phase sensor for detecting the quantity of one or more chemical compounds or elements.

12. Unit according to one of the preceding claims, **characterised in that** the control means (23) of the metering is arranged next to the connection conduit (20) in a housing on the inside wall of the well (9).

13. Unit according to one of the preceding claims, **characterised in that** the electric control of the unit is arranged in a housing on the inside wall of the well (9).

## Patentansprüche

1. Einheit zur Behandlung von strömender Flüssigkeit, insbesondere zur Behandlung von Abwasser, mit einem Brunnen (9), mit einem Einlassleitungsanschluss (21) und mit einem Auslassleitungsanschluss (22) an der Außenseite des Brunnens (9), mit einer Verbindungsleitung (20) in dem Brunnen (9), wobei die Verbindungsleitung (20) den Einlassleitungsanschluss (21) mit dem Auslassleitungsanschluss (22) verbindet, mit mindestens einem Lagerbehälter (13) für mindestens eine flüssige oder gasförmige Chemikalie, mit einer Dosierpumpe oder einem Kompressor (18) zum Pumpen der mindestens einen Chemikalie vom Lagerbehälter (13) in die Verbindungsleitung (20), und mit einer Steuereinrichtung (23) zum Aktivieren der Dosierpumpe oder des Kompressors (18), **dadurch gekennzeichnet, dass** die Dosierpumpe oder der Kompressor (18), der Lagerbehälter (13) und die Steuereinrichtung (23) in dem Brunnen (9) angeordnet sind, wobei der Lagerbehälter (13) am Boden des Brunnens (9) angeordnet ist, wobei die Oberseite des Lagerbehälters (13) oder eine Plattform, die an der Oberseite des Lagerbehälters (13) angeordnet ist, eine Bodenfläche (14) für eine Person, die den Brunnen (9) betritt, bildet.

2. Einheit nach Anspruch 1, **dadurch gekennzeichnet, dass** es Sensormittel (27) zum Nachweisen von einem Durchlauf in der Verbindungsleitung gibt, mit Sensormitteln (24, 26) zum Nachweisen der Menge von einer oder mehreren chemischen Verbindungen oder Elementen der Flüssigkeit in der Verbindungsleitung (20) stromaufwärts und/oder stromabwärts des Auslaufs (25) der Leitung (19), die von der Dosierpumpe (18) kommt, und wobei die Steuereinrichtung (23) zum Aktivieren der Dosierpumpe oder des Kompressors (18) abhängig von dem nachgewiesenen Durchfluss und der Menge vorgesehen ist.

3. Einheit nach Anspruch 1, **dadurch gekennzeichnet, dass** die Sensormittel (26) zum Nachweisen der Menge von einer oder mehreren chemischen Verbindungen oder Elementen der Flüssigkeit in der Verbindungsleitung (20) stromabwärts des Auslaufs (25) der Leitung (19), die von der Dosierpumpe (18) kommt, vorgesehen sind, und dass ein geschlossener Regelkreis für die Dosierung bereitgestellt ist.

4. Einheit nach einem der vorhergehenden Ansprüche, **dadurch gekennzeichnet, dass** der Brunnen (9) dazu vorgesehen und entwickelt ist, im Boden angeordnet zu sein, wobei sein oberes Ende sich an die Erdoberfläche (10) erstreckt und durch eine Abdeckung (11, 12) verschlossen ist.

5. Einheit nach Anspruch 4, **dadurch gekennzeichnet, dass** die Abdeckung einen fixierten Teil (11) und einen beweglichen Teil aufweist, wobei der bewegliche Teil (12) vorzugsweise auf dem fixierten Teil (11) geschwenkt wird.

6. Einheit nach Anspruch 5, **dadurch gekennzeichnet, dass** ein Entlüftungsrohr (15) mit dem Lagerbehälter (13) verbunden ist und zur Atmosphäre führt, wobei das Entlüftungsrohr (15) durch den fixierten Teil (11) der Abdeckung führt.

7. Einheit nach Anspruch 4, 5 oder 6, **dadurch gekennzeichnet, dass** es ein Einfüllrohr (16) gibt, das in den Lagerbehälter (13) mündet, und das unter dem beweglichen Teil (12) der Abdeckung oder über dem fixierten Teil (11) der Abdeckung endet.

8. Einheit nach einem der Ansprüche 2 bis 7, **dadurch gekennzeichnet, dass** die Distanz (d) zwischen den Sensormitteln (24) zum Nachweisen der Menge von einer oder mehreren chemischen Verbindungen oder Elementen der Flüssigkeit in der Verbindungsleitung (20) und dem Auslauf (25) der Leitung (20), die von der Dosierpumpe (18) kommt, mindestens 5 % des Durchmessers des Brunnens (9) entspricht.

9. Einheit nach einem der vorhergehenden Ansprüche, **dadurch gekennzeichnet, dass** die Verbindungsleitung (20) in dem Brunnen (9) im mittleren Drittel der Gesamthöhe des Brunnens (9), mindestens 80 cm unter der Oberseite des Brunnens (9) angeordnet ist.

10. Einheit nach einem der vorhergehenden Ansprüche, **dadurch gekennzeichnet, dass** die Verbindungsleitung (20) in dem Brunnen (9) außermittig in einem Abstand zu der Mitte des Brunnens angeordnet ist.

11. Einheit nach einem der vorhergehenden Ansprüche, **dadurch gekennzeichnet, dass** es eine Verbindung (29) für externe Sensormittel (28), insbesondere für einen Gasphasensensor (28) und/oder einen Flüssigphasensensor, zum Nachweisen der Menge von einer oder mehreren chemischen Verbindungen oder Elementen, gibt.

12. Einheit nach einem der vorhergehenden Ansprüche, **dadurch gekennzeichnet, dass** die Steuereinrichtung (23) der Dosierung neben der Verbindungsleitung (20) in einem Gehäuse an der Innenwand des Brunnens (9) angeordnet ist.

13. Einheit nach einem der vorhergehenden Ansprüche, **dadurch gekennzeichnet, dass** die elektrische Steuerung der Einheit in einem Gehäuse an der Innenseite des Brunnens (9) angeordnet ist.

## Revendications

1. Unité de traitement de liquide s'écoulant, notamment pour un traitement d'eaux usées, avec un puits (9), avec un connecteur de conduit d'entrée (21) et avec un connecteur de conduit de sortie (22) à l'extérieur du puits (9), avec un conduit de connexion (20) à l'intérieur du puits (9), ledit conduit de connexion (20) connectant le connecteur de conduit d'entrée (21) au connecteur de conduit de sortie (22), avec au moins un réservoir de stockage (13) pour au moins un produit chimique liquide ou gazeux avec une pompe ou un compresseur de dosage (18) pour pomper le au moins un produit chimique depuis le réservoir de stockage (13) jusque dans le conduit de connexion (20) et avec des moyens de commande (23) pour activer la pompe ou le compresseur de dosage (18), **caractérisée en ce que** la pompe ou le compresseur de dosage (18), le réservoir de stockage (13) et les moyens de commande (23) sont agencés à l'intérieur du puits (9), le réservoir de stockage (13) étant agencé au fond du puits (9), le côté supérieur du réservoir de stockage (13) ou une plate-forme agencée sur le côté supérieur du réservoir de stockage (13) formant une surface de plancher (14) pour une personne entrant dans le puits (9).

2. Unité selon la revendication 1, **caractérisée par** des moyens formant capteur (27) pour détecter un écoulement dans le conduit de connexion, avec des moyens formant capteur (24, 26) pour détecter la quantité d'un ou plusieurs composés ou éléments chimiques du liquide dans le conduit de connexion (20) en amont et/ou en aval de la sortie (25) du conduit (19) provenant de la pompe de dosage (18), et avec les moyens de commande (23) destinés à activer la pompe ou le compresseur de dosage (18) en fonction de l'écoulement et de la quantité détectés.

3. Unité selon la revendication 1, **caractérisée en ce que** des moyens formant capteur (26) sont prévus pour détecter la quantité des un ou plusieurs composés ou éléments chimiques du liquide dans le conduit de connexion (20) en amont et/ou en aval de la sortie (25) du conduit (19) provenant de la pompe de dosage (18), et **en ce qu'**une commande de dosage en boucle fermée pour le dosage est prévue.

4. Unité selon l'une quelconque des revendications précédentes, **caractérisée en ce que** le puits (9) est prévu et conçu pour être agencé dans le sol, son extrémité supérieure s'étendant jusqu'à la surface (10) du sol et étant fermée par un couvercle (11, 12).

5. Unité selon la revendication 4, **caractérisée en ce que** le couvercle présente une partie fixe (11) et une partie mobile, ladite partie mobile (12) étant de préférence pivotée sur la partie fixe (11).

6. Unité selon la revendication 5, **caractérisée en ce qu'**un tuyau de ventilation (15) est connecté au réservoir de stockage (13) et menant à l'atmosphère, ledit tuyau de ventilation (15) menant à travers la partie fixe (11) du couvercle.

7. Unité selon la revendication 4, 5 ou 6, **caractérisée par** un tuyau de remplissage (16) qui débouche dans le réservoir de stockage (13) et qui se termine en dessous de la partie mobile (12) du couvercle ou au-dessous de la partie fixe (11) du couvercle.

8. Unité selon l'une quelconque des revendications 2 à 7, **caractérisée en ce que** la distance (d) entre des moyens formant capteur (24) pour détecter la quantité des un ou plusieurs composés ou éléments chimiques du liquide dans le conduit de connexion (20) et la sortie (25) du conduit (20) provenant de la pompe de dosage (18) correspond à au moins 5 % du diamètre du puits (9).

9. Unité selon l'une quelconque des revendications précédentes, **caractérisée en ce que** le conduit de connexion (20) à l'intérieur du puits (9) est agencé dans le tiers médian de la hauteur totale du puits (9) à au moins 80 cm sous le haut du puits (9).

10. Unité selon l'une quelconque des revendications précédentes, **caractérisée en ce que** le conduit de connexion (20) à l'intérieur du puits (9) est agencé à une distance par rapport au milieu du centre du puits.

11. Unité selon l'une quelconque des revendications précédentes, **caractérisée par** une connexion (29) pour des moyens formant capteur externes (28), notamment pour un capteur phase gazeuse (28) et/ou capteur de phase liquide afin de détecter la quantité d'un ou plusieurs composés ou éléments chimiques.

12. Unité selon l'une quelconque des revendications précédentes, **caractérisée en ce que** les moyens de commande (23) du dosage sont agencés à côté du conduit de connexion (20) dans un logement sur la paroi intérieure du puits (9).

13. Unité selon l'une quelconque des revendications précédentes, **caractérisée en ce que** la commande électrique de l'unité est agencée dans un logement sur la paroi intérieure du puits (9).
